(19) Europäisches Patentamt
European Patent Office
Office européen des brevets

(11) EP 1 123 362 B1

(12) EUROPEAN PATENT SPECIFICATION

(45) Date of publication and mention of the grant of the patent:
**15.09.2004 Bulletin 2004/38**

(21) Application number: **99952572.8**

(22) Date of filing: **08.10.1999**

(51) Int Cl.7: **C09J 153/02**

(86) International application number:
**PCT/EP1999/007759**

(87) International publication number:
**WO 2000/022062 (20.04.2000 Gazette 2000/16)**

# (54) RADIATION-CURABLE ADHESIVE

STRAHLENHÄRTBARES KLEBEMITTEL

ADHESIF DURCISSABLE PAR RAYONNEMENT

(84) Designated Contracting States:
**AT BE CH CY DE DK ES FI FR GB GR IE IT LI LU MC NL PT SE**

(30) Priority: **09.10.1998 EP 98308255**

(43) Date of publication of application:
**16.08.2001 Bulletin 2001/33**

(73) Proprietor: **KRATON Polymers Research B.V.
1031 CM Amsterdam (NL)**

(72) Inventors:
- **DUPONT, Martine, Jeanne
B-1348 Ottignies, Louvain-La-Neuve (BE)**
- **MAYENEZ, Catherine
B-1348 Ottignies, Louvain-La-Neuve (BE)**

(74) Representative:
**Kortekaas, Marcellinus C. J. A. et al
KRATON Polymers Research B.V.,
P.O. Box 37666
1030 BH Amsterdam (NL)**

(56) References cited:
**EP-A- 0 243 956
WO-A-93/24547
WO-A-97/29140
US-A- 5 104 921
US-A- 5 804 663**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention relates to adhesives, in particular radiation-curable adhesives, having a high peel adhesion and a high temperature resistance. The present invention further relates to articles containing the adhesive.

### Background of the Invention

Radiation-curable adhesives are well known in the art. Recently, Shell Chemicals has developed block copolymers containing styrene blocks and butadiene blocks, where the butadiene blocks have a 1,2 vinyl content of more than 25% by weight. One of such block copolymers is sold under the trade name KRATON D-KX-222, and is especially developed to be radiation curable (KRATON is a trademark).

However, the high vinyl content of KRATON D-KX222 which is necessary for fast radiation curing, in particular fast UV curing, leads to a higher tendency to gel in a hot-melt tank than standard styrene - butadiene - styrene block copolymers containing butadiene having a 1,2-vinyl content of up to 25% by weight. It was observed that gel is formed in adhesives aged for 16 hours at 160 °C. Many applications however, require a.gel-free time of 24 hours at 160 °C.

As reported in "Communication from SRTCL 1-98", published by Shell Research and Technology Centre Louvain-la-Neuve in January 1998, this problem is solved by using a combination of different stabilisers. Specific examples that were mentioned are a combination of IRGANOX 1010 and IRGAFOS 168, optionally in combination with IRGANOX 3052, and a combination of SUMILIZER GS and SUMILIZER TP-D. IRGANOX and IRGAFOS are trademarks and IRGANOX and IRGAFOS stabilisers are available commercially from Ciba-Geigy. SUMILIZER is a trademark and SUMILIZER stabilisers are commercially available from Sumitomo.

These effective stabiliser systems for retarding gelling in adhesives stored in a hot-melt tank will only be useful in a practical sense if they do not retard the gelling induced by radiation curing. As reported in the aforementioned Communication, this was not at all a problem, despite the fact that e.g. SUMILIZER GS and IRGANOX 3052 are anti-gelling agents.

The potential of these and other stabiliser combinations in adhesive compositions containing high vinyl content block copolymers, was also reported in EP-B-0243956.

Radiation curable hot melt adhesives containing block copolymers having butadiene blocks with a high 1,2-vinyl content have been described in WO 93/24547 and WO 97/29140.

WO 97/29140 discloses an adhesive composition containing 100 parts of a block copolymer, 75 parts of a fully saturated oil and 225 parts of a partially hydrogenated hydrocarbon resin (HERCULES MBG 264). The Tg was -16 °C (HERCULES MBG is a trademark).

WO 97/29140 further discloses adhesive compositions containing liquid tackifying resins rather than a partially or fully saturated oil. However, especially for hot-melt adhesive compositions, the Shear Adhesion Failure Temperature is too low for high temperature applications. Moreover, use of liquid tackifying resins increases the price of the total adhesive formulation, and the maximum curing speed is not sufficiently high.

WO 93/24547 discloses an adhesive composition containing 100 parts of a block copolymer, 15 parts of a fully saturated oil and 90 parts of a partially hydrogenated hydrocarbon resin (FORAL 85). The Tg was -18 °C (FORAL is a trademark).

There is still a need for improved radiation-curable adhesive compositions. In particular, it would be desirable if a radiation-curable adhesive, preferably a radiation-curable hot melt adhesive, could be found that meet the requirements desirable for the most demanding tape applications, such as a high peel adhesion according to the peel adhesion 180° test (ASTM-D3330M-83), preferably combined with a high shear adhesion failure temperature (SAFT).

Such adhesives have now been found.

### Summary of the Invention

Therefore, according to a first aspect, the present invention relates to a radiation-curable adhesive comprising

(a) a block copolymer comprising at least two mono-alkenyl aromatic hydrocarbon blocks and at least one butadiene block, wherein the 1,2-vinyl content in the butadiene block is at least 25% by weight;
(b) from 100 to 300 parts by weight of a tackifying resin, per 100 parts by weight of block copolymer,
wherein the tackifying resin is a partially hydrogenated resin, having an unsaturation index (Ui) in the range from 3 to 25%
(c) 5 to 100 parts by weight of a partially or fully saturated oil;
(d) optionally a photo-initiator; and

(e) one or more stabilisers;

wherein the glass transition temperature (Tg) as calculated by the Fox equation based on Differential Scanning Calorimetry is in the range from -15 °C to -5 °C.

According to a second aspect, the present invention relates to a radiation-cured adhesive composition obtainable by radiation curing of a radiation-curable hot melt adhesive composition as described herein.

According to a third aspect, the present invention relates to articles containing a radiation-curable hot melt adhesive composition as described herein, or a radiation-cured adhesive composition as described herein.

According to a fourth aspect, the present invention relates to a tape comprising a layer of a radiation-curable hot melt adhesive composition as described herein, or a radiation-cured adhesive composition as described herein, coated on a film.

Detailed description of the Invention

Block copolymers are well known to those skilled in the art. Block copolymers are typically prepared by anionic polymerisation. The preparation of block copolymers is well known to those skilled in the art and has been described in e.g. US patents 3,265,765; 3,231,635; 3,149,182; 3,238,173; 3,239,478; 3,431,323; Re. 27,145, and many handbooks including "Thermoplastic Elastomers, a comprehensive review" (1987), edited by N.R. Legge, G. Holden, H.E. Schroeder, Hanser publishers.

The 1,2-vinyl content in the butadiene block can be increased to more, than 25% by polymerising butadiene in the presence of a modifier.

Modifiers to be suitably used for this purpose can be selected from the group consisting of ethers, amines and other Lewis bases and more in particular from the group consisting of dialkyl ethers of glycols. Most preferred modifiers are selected from dialkyl ether of ethylene glycol, containing the same of different terminal alkoxy groups and optionally bearing an alkyl substituent on the middle ethylene radical, such as monoglyme, diglyme, diethoxy ethane, 1,2-diethoxy-propane, 1-ethoxy, 2-tert.-butoxy ethane, of which 1,2-diethoxy propane is most preferred.

The 1,2-vinyl content in the butadiene block is preferably in the range from 30 to 70% by weight, more preferably in the range from 35 to 65% by weight.

The mono-alkenyl aromatic monomer is typically selected from styrene, $C_1$-$C_4$ alkylstyrene and $C_1$-$C_4$ dialkylstyrene, in particular styrene, $\alpha$-methylstyrene, o-methylstyrene or p-methylstyrene, 1,3-dimethylstyrene, p-tert.-butylstyrene or mixtures thereof, most preferably styrene.

The block copolymer preferably has a mono-alkenyl aromatic hydrocarbon content in the range of from 10 to 50% by weight, more preferably in the range of from 12 to 35% by weight.

The block copolymer may be linear or radial and typically has the structure A-B-A or (A-B)nY, with n being an integer from 2 to 100, preferably 2 to 20, more preferably 2 to 6 and Y being the residue of a coupling agent; wherein A is a poly(mono-alkenyl aromatic hydrocarbon) block and B is a poly(butadiene) block.

According to a particularly preferred embodiment, the block copolymer has the general structure $(AB)_pX(B^1)_q$, wherein A is a poly(mono-alkenyl aromatic hydrocarbon) block and B and B1 are the same or different poly-(butadiene) blocks, wherein X is the residue of a multivalent coupling agent having a maximum of active sites (m) in the range of from 3 to 6, wherein the number average value of p is in the range from 1.5 to (m-0.5), and the number average value of q is from 0.5 to (m-1.5). It will be appreciated that if p is on average 1.5, the block copolymer is a mixture of block copolymers, in which one component has the structure $(AB)_1X(B)_{q'}$ and another component has the structure $(AB)_2X(B)_{q''}$. Accordingly, this mixture includes a block copolymer comprising at least two mono-alkenyl aromatic hydrocarbon blocks.

Preferably, the average sum of p and q values is less than m and the coupling efficiency is less than 95%, and more preferably more than 55%. Preferably, the sum of p and q values is more than 2.

The coupling efficiency as used herein is the coupling efficiency (in % by weight) as determined by gel permeation chromatography (GPC) of the total coupling process.

It will be appreciated by a person skilled in the art, that the sum of the p and q values is determined by the coupling efficiency (CE).

According to a particularly preferred embodiment said coupling efficiency is in the range of from 60 to 95%, more preferably from 75 to 92% and even more preferably from 80 to 91%.

The above block copolymers can suitably be incorporated in adhesive sealant and coating compositions which are radiation cured in their final form as well as in compositions which are not cured in their final form.

These block copolymers show a combination of:

- an optimum UV reactivity/melt viscosity balance, due to their high poly (conjugated diene) molecular weight and vinyl content incorporated in one radial structure.

- a distribution of composing individual molecules, some of them being particularly suited for UV sensitivity (high molecular weight) whereas smaller ones have appeared to confer high tack property before and after UV-curing.
- the mixtures of block copolymers obtained show a significantly decreased hot melt viscosity in the complete adhesive composition under usual processing temperatures.

Preferably, the respective number average values of p and q in the radial multiarmed block copolymers are in the range from 1.5 to m-1.5, wherein m represents the maximum functionality of the coupling agent.
More preferably the radial multiarmed block copolymers have been derived from trivalent or tetravalent coupling agents.
According to one of the preferred embodiments, a trivalent or a tetravalent coupling agent, such as trinonyl phenyl phosphite, tetrachloro silane ($SiCl_4$), tetramethoxy silane ($Si(OMe)_4$), diethyl adipate, dimethyl adipate, and gamma-glycidoxy-propyl-trimethoxy-silane (gamma-GPTS) is used, more preferably gamma-GPTS or trinonyl phenyl phosphite.
The A blocks in said block copolymers have in general a weight average molecular weight in the range of from 5,000 to 50,000 preferably from 7,000 to 25,000 and most preferably from 9,000 to 17,000. The B and B1 blocks in said block copolymers may have the same or different apparent molecular weight in the range of from 15,000 to 250,000 and preferably from 20,000 to 100,000.
The block copolymers of the present invention preferably have a total apparent molecular weight in the range of from 50,000 to 500,000, more preferably from 150,000 to 350,000.
With the term "apparent molecular weight" as used throughout the specification is meant the molecular weight of a polymer as measured with gel permeation chromatography (GPC) using polystyrene calibration standards (according to ASTM D-3536).
Tackifying resins are well known to those skilled in the art and a wide variety of different tackifying resins is available commercially. The tackifying resin to be used in the present invention is preferably a partially hydrogenated hydrocarbon resin or a rosin ester.
The partially hydrogenated tackifying resin preferably has an unsaturation index (Ui) in the range from 5 to 22%, more preferably from 7 to 20%, in particular from 7 to 17%. If a mixture of tackifying resins is used, the mixture preferably should have an unsaturation index in any one of the above ranges.
The unsaturation index is determined by $^{13}C$ NMR according to the procedure outlined in Canadian patent specification CA 1337218, incorporated herein by reference.
The tackifying resin typically has a softening point as determined by the Ring and Ball method (ASTM E 28) of at least 70 °C, preferably in the range of from 75 to 125 °C, more preferably 80 to 105 °C.
According to a particularly preferred embodiment, the tackifying resin is a partially hydrogenated hydrocarbon resin.
The tackifying resin is preferably present in an amount from 100 to 220 parts by weight per 100 parts by weight of block copolymer, more preferably from 150 to 200 parts by weight per 100 parts by weight of block copolymer.
The radiation-curable adhesive composition of the present invention further comprises a partially or fully saturated oil. Preferably, the partially or fully saturated oil is a naphthenic oil.
The partially or fully saturated oil is preferably present in an amount from 10 to 75, more preferably 15 to 70 parts by weight per 100 parts by weight of block copolymer.
The block copolymer, the tackifying resin and the oil are admixed such that the glass transition temperature (Tg) is at least -15 °C, preferably at least -13 °C, more preferably at least -12 °C. The glass transition temperature is not more than -5 °C, preferably not more than -7 °C, more preferably not more than -8 °C, as calculated by the well-known Fox equation based on Differential Scanning Calorimetry (DSC).

$$\frac{1}{\text{Adhesive Tg}} = \frac{\text{WTPE}}{\text{TgTPE}} + \frac{\text{W resin}}{\text{Tg resin}} + \frac{\text{W oil}}{\text{TG oil}}$$

WTPE, W resin and W oil are the weight fractions of the polybutadiene block(s) of the block copolymers; tackifying resin; and oil respectively. The weight fraction of WTPE is defined as weight polybutadiene block(s) (wtB) divided by [wtB + weight of resin + weight of oil].
TgTPE, Tg resin and Tg oil are the glass transition temperatures of the butadiene block(s) of the block copolymer; the tackifying resin; and the oil respectively.
The total amount of block copolymer in the composition is preferably from 20 to 50% by weight, more preferably from 25 to 45% by weight, even more preferably from 27 to less than 35% by weight.
As indicated earlier the compositions of the present invention can be cured depending on the final end use of the compositions. Such curing is performed by exposure to high energy ionizing radiation such as electron beam radiation or by UV radiation.

The electron beam radiation or high energy ionizing radiation which employed to effect the cross-linking reaction can be obtained from any suitable source such as an atomic pile, an electron gun, a resonant transformer accelerator, a Van de Graaf electron accelerator, a Lineac electron accelerator, a betatron, a synchrotron, a cyclotron. Radiation from these sources will produce ionizing radiation such as electrons, protons, neutrons, deuterons, gamma rays, X rays, alpha particles, and beta particles.

The cross-linking reaction is conveniently effected at room temperature, but it can be conducted at depressed or elevated temperatures if desired.

There is no need for strict exclusion of air during UV irradiation. Therefore it is not necessary to perform the crosslinking by UV irradiating the composition, being sandwiched between substrates such as when the composition is utilised as a tie-layer between these substrates, or in isolated equipment filled with an oxygen free inert atmosphere after evacuation.

It will be appreciated by a person skilled in the art that said curing by irradiation in an oxygen containing atmosphere, such as air, provides a significant cost saving.

The amount of irradiation required to produce a satisfactory cure depends primarily upon the type and concentration of the block copolymer employed and the unsaturation level present in the composition. Suitable dosages of electron beam irradiation are typically in the range from 0.5 to 8 Mrad, preferably from 4 Mrad to 8 Mrad and more preferably from 5 Mrad to 7 Mrad.

The adhesive compositions may preferably be cured by exposure to ultraviolet radiation for a period of time sufficient to effect the desired amount of cross-linking. Ordinarily, when use of ultraviolet light is contemplated, the adhesive composition will be formulated with from 0.2 to 30 parts by weight of a photo-initiator per 100 parts by the weight of the block copolymer. Any of the known photo-initiators may be used.

The photo-initiator, if present, is preferably selected from the group consisting of:

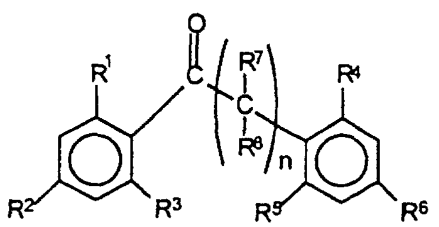

(I)

(1) a benzophenone of the general formula (I)
wherein $R^1$ to $R^6$ independently represent hydrogen or an alkyl group having from 1 to 4 carbon atoms, preferably methyl, and wherein $R^7$ and/or $R^8$ have the same meaning as $R^1$ to $R^6$ or represent an alkoxy group of 1 to 4 carbon atoms and wherein n has a value of 0, 1, or 2, optionally in combination with at least one tertiary amine,
(2) a sulphur-containing carbonyl compound, wherein the carbonyl group is directly bound to at least one aromatic ring and is preferably of the general formula II

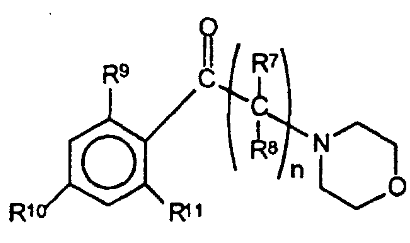

(II)

wherein $R^9$, $R^{10}$, and $R^{11}$ each may represent hydrogen, alkyl of 1 to 4 carbon atoms, or an alkylthio having 1 to 4 carbon atoms, and
(3) and mixtures of (1) and (2).

Examples of suitable compounds of category (1) are benzo-phenone, 2,4,6-trimethylbenzophenone, 4-methyl-benzophenone and a eutactic mixture of 2,4,6-trimethylbenzophenone and 4-methylbenzo-phenone (ESACURE TZT) and 2,2-dimethoxy-1,2-diphenylethan-1-one (IRGACURE 651) (ESACURE and IRGACURE are trademarks). These compound may be employed in combination with tertiary amines, such as e.g. UVECRYL 7100 (UVECRYL is a trade mark).

Category (2) embraces compounds such as e.g. 2-methyl-1-[4-(methylthio)phenyl]-2-morpholinopropanone-1, commercially available as IRGACURE 907.

An example of suitable mixtures (category (3)) is a mixture of 15% by weight of a mixture of 2-isopropylthioxanthone and 4-isopropylthioxanthone and 4-isopropylthioxanthone, and 85% by weight of a mixture of 2,4,6-trimethylbenzophenone and 4-methyl-benzophenone. This mixture is commercially available under the trade name ESACURE X15.

In a preferred embodiment of the present invention, the photoinitiator is selected from the group consisting of (i) benzophenone, (ii) a mixture of benzophenone and a tertiary amine containing a carbonyl group which is directly bonded to at least one aromatic ring, (iii) 2-methyl-1-[9-(methylthio)phenyl]-2-morpholinopropanone-1 (IRGACURE 907), (iv) 2,2-dimethoxy-1,2-diphenylethan-1-one (IRGACURE 651), of which (iii) and (iv) are most preferred.

It will be appreciated that the length of the exposure will be dependent on the intensity of the radiation, the amount and particular type of the ultraviolet sensitising compound employed, thickness of the (adhesive) layer to be cured etc. The photo-initiators may preferably be included in an amount in the range of from 1 to 10 parts by weight per 100 parts by weight of block copolymer and more preferably in an amount in the range of from 1 to 5 parts by weight.

The UV irradiation used for cross-linking the block copolymer composition of the present invention in principle may be any UV source having an output spectrum showing one or more peaks at wavelengths between 200 and 500 nanometer (nm). Particularly suitable UV sources are Fusion bulb lamps. H and D bulb lamps (linear power 118 W/cm (300 W/inch) and 236 W/cm (600 W/inch) are particularly useful, while a combination of D bulb and H bulb lamps can also be suitably applied.

It will be appreciated that the output spectrum of any UV source has to substantially match the absorption spectrum of the photo-initiator.

The exposure to UV irradiation may be performed by any known method. A suitable method for instance is exposing a sample either in a layer obtained from a hot melt or in a layer obtained by solvent coating to UV irradiation by passing said sample at a certain speed (expressed in meters per minute, m/min) underneath the UV source. If necessary, the exposure to irradiation may be repeated one or more times, e.g. by repeatedly passing the sample underneath the UV source or by passing the sample underneath two or more lamps positioned in series, in order to accomplish sufficient curing. The lower the total irradiation dose and the higher the speed with which the sample can be passed underneath the UV source for obtaining sufficient and satisfactory curing, the better the curing ability of the said sample.

Stabilisers are typically added to the commercially available compounds in order to protect the ingredients against degradation during preparation and use of the adhesive compositions, however without interfering with the radiation curing of the polymer.

Combinations of stabilisers are often more effective due to the different mechanisms of degradation to which various polymers are subject.

Certain hindered phenols, organo-metallic compounds, aromatic amines, aromatic phosphites and sulphur compounds are useful for this purpose.

Examples of effective types of these materials include phenolic antioxidants, thio compounds and tris-(nonylated phenyl) phosphites.

In general from 0.01 percent to 5.0 percent by weight of one or more stabilisers is included in the adhesive composition.

The radiation-curable hot melt adhesive composition of the present invention preferably contains two or more stabilisers, selected from at least two of the stabiliser categories of anti-gelling agents, primary anti-oxidants and secondary anti-oxidants. More preferably, the two or more stabilisers are selected from a combination of the following stabiliser categories of anti-gelling agents and secondary anti-oxidants; or primary anti-oxidants and secondary anti-oxidants; or a combination of all three stabiliser categories. These stabiliser categories are well known to those skilled in the art and a large variety of stabilisers in each of these categories is available commercially.

The anti-gelling agent is preferably selected from the group consisting of phenolic acrylates or methacrylates, more preferably phenolic acrylates or methacrylates represented by the general formula (III):

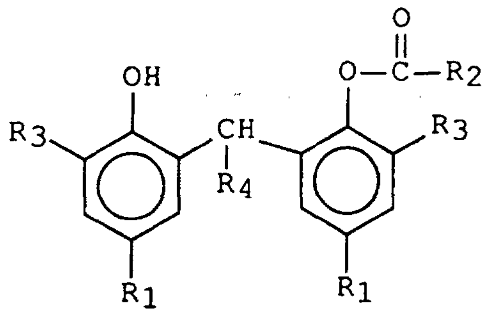

(III)

wherein $R_1$ is an alkyl group having 1 to 6 carbon atoms, $R_2$ is an alkenyl group having 2 to 4 carbon atoms, $R_3$ is a tert-butyl, a tert-pentyl, a cyclopentyl or a cyclohexyl group, and $R_4$ is hydrogen or an alkyl group having 1 to 18 carbon atoms.

The secondary anti-oxidant is preferably selected from the group consisting of compounds represented by the general formula (IV) or (V):

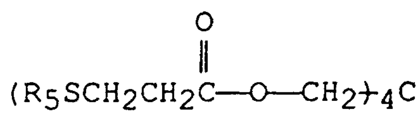

(IV)

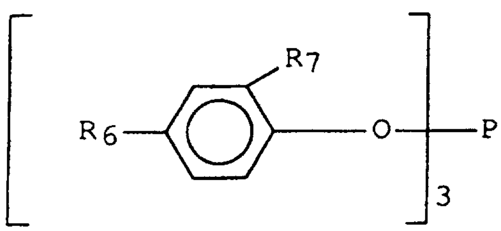

(V)

wherein $R_5$ is an alkyl group having 3 to 20 carbon atoms, $R_6$ is an alkyl group having 3 to 20 carbon atoms or a cycloalkyl group having 5 to 20 carbon atoms, and $R_7$ is hydrogen, a tert-butyl, a tert-pentyl, a cyclopentyl or a cyclohexyl group, more preferably $R_6$ and $R_7$ are independently selected from a tert-butyl, a tert-pentyl, a cyclopentyl or a cyclohexyl group.

According to a particularly preferred embodiment a mixture of two secondary anti-oxidants selected from group (V) is used, the first secondary antioxidant being selected from those compounds wherein $R_6$ and $R_7$ are independently selected from a tert-butyl, a tert-pentyl, a cyclopentyl or a cyclohexyl group, such as IRGAFOS 168, and the second secondary antioxidant being selected from those compounds wherein $R_6$ is an alkyl group having 5 to 15 carbon atoms and $R_7$ is hydrogen, such as TNPP (Trisnonylphenyl phosphite). IRGAFOS 168 is a tradename for Tris(2,4-ditertiary butylphenyl) phosphite.

The primary anti-oxidant is preferably selected from the group consisting of hindered phenolic compounds.

According to one preferred embodiment three stabilisers are present, each being selected from a different stabiliser category.

Most preferably, at least two stabilisers are present, one being selected from anti-gelling agents and another stabiliser being selected from secondary anti-oxidants.

The invention is further illustrated by means of the following examples.

Examples 1-8

Eight radiation-curable hot melt adhesives were prepared by mixing and compounding adhesive formulations 1 to 8 shown in Table I. The mixing and compounding was carried out in a 300 g Z-blade mixer under nitrogen blanket.

The radiation-curable hot melt adhesives were then coated with a Chemsulant HM100 lab coater on a 36 μm

polyester (PET) film. The adhesive coatings had a thickness of 40 ± 2 µm or 60 ± 2 µm.

The adhesive coatings were cured by UV radiation by passing the adhesive coatings at a speed of 5 m/min under a combination of two F-300 bulbs D and H from Fusion (120 W/cm). The UV rays were focused straight onto the adhesive surface in the presence of air. Peel adhesion at 180° and Shear adhesion failure temperature (SAFT) were determined before and after curing. Results are reported in Table 2.

The peel adhesion at 180° was measured in accordance with ASTM-D3330M-83. The SAFT was determined as follows:

The SAFT test is carried out in an air circulating oven equipped with an electro-mechanical device monitoring a stepwise increase of the temperature. Inside the oven, supports are attached to the side walls on which six aluminium racks can be placed under an angle of 2°. These racks support 6 metal (stainless steel) plates onto which the tape samples will be applied. These plates rest against a narrow ridge in which 6 slots are cut; the free part of the coated film on which the weights are hung, passes along these slots.

One end of the strip is centred and stuck partially onto a stainless steel plate; the other end of the strip is held so that it does not make contact with the plate but is positioned below. The strip is pressed firmly against the stainless steel plate avoiding entrapment of air bubbles. The adhered part of the strip is cut at one inch (2.5 cm) of the stainless steel edge. The surface is then 2.5 cm x 2.5 cm (1 $inch^2$). Finally, the test specimens are stored for 24 hours.

The racks with the samples are installed in the oven and weights of 500 grams are hung to the free end of the strip and clamped with "Hofmann" hose clamps.

These weights are initially supported by a base plate which can move up and downwards by means of a "lab jack". Just before the start of the test, the base plate is moved downwards so that the weights now hang freely above the micro or photo-electrical switches. These switches are connected to a counter. The temperature in the oven is displayed on a digital thermometer.

When a strip falls, the weight falls down on the micro switch and the timer is stopped. When the time to failure is known, the temperature at which failure occurred can be read off from the calculated time/temperature diagram. The SAFT value is the average of two temperatures recorded with two samples.

Comparative Example A

Another radiation-curable hot melt adhesive was prepared by mixing and compounding adhesive formulation A in the same way as in Examples 1-8. The composition of adhesive formulation A is also shown in Table I. Adhesive formulation A contained a fully hydrogenated tackifying hydrocarbon resin (REGALITE R91), having an unsaturation index (Ui) of 0.9% (REGALITE is a trademark).

Adhesive coatings were prepared and the coatings cured as in Examples 1-8. Peel adhesion at 180° and shear adhesion failure temperature (SAFT) were determined before and after curing. Results are reported in Table 2.

Table 1

| Formulation | 1 | 2 | 3 | 4 | 5 | 6 | 7 | 8 | A |
|---|---|---|---|---|---|---|---|---|---|
| KX222 | 100 | 100 | 100 | 100 | 100 | 100 | 100 | 100 | 100 |
| REGALITE S101 | 183 | | 170 | | 130 | | 120 | | |
| MBG 264 | | 198 | | 183 | | 140 | | 130 | |
| REGALITE R91 | | | | | | | | | 150 |
| ONDINA 68 | 50 | 35 | 63 | 50 | 20 | 10 | 30 | 20 | 60 |
| IRGACURE 651 | 3 | 3 | 3 | 3 | 3 | 3 | 3 | 3 | 3 |
| SUMILIZER GS | 1 | 1 | 1 | 1 | 1 | 1 | 1 | 1 | 1 |
| SUMILIZER TPD | 1 | 1 | 1 | 1 | 1 | 1 | 1 | 1 | 1 |
| Tg (in °C) of formulation | -10 | -10 | -15 | -15 | -10 | -10 | -15 | -15 | -15 |

KX222 = KRATON D KX222, a styrenic block copolymer of idealised structure (AB)2X(B)2, wherein A is a polystyrene block and B is a butadiene block having a 1,2-vinyl content of 57% by weight. X is gamma-GPTS. The coupling efficiency is 89%.

REGALITE S101 is a partially hydrogenated hydrocarbon tackifying resin. (Ui is 8%).

MBG 264 = Hercules MBG 264, a partially hydrogenated hydrocarbon tackifying resin having an unsaturation index of 19.7%.

REGALITE R91 is a fully hydrogenated hydrocarbon tackifying resin having an unsaturation index of 0.9%.

ONDINA 68 is a saturated naphthenic oil having an unsaturation index of 2.1% (ONDINA is a trademark).

IRGACURE 651 = photo-initiator (2,2-dimethoxy-1,2-diphenylethan-1-one).

SUMILIZER GS = 2-[1-(2-Hydroxy-3, 5-di tert-pentylphenyl)ethyl]-4,6-di-tert-pentylphenyl acrylate.

SUMILIZER TP-D = $(RSC_2H_4COOCH_2)_4-C$ in which R is a dodecyl group.

Table 2

| | Not cured | | Cured | | | |
|---|---|---|---|---|---|---|
| | PA 180°, N/ 25mm | | PA 180°, N/ 25mm | | SAFT, °C | |
| | 40 µm | 60 µm | 40 µm | 60 µm | 40 µm | 60 µm |
| 1 | 28 | 33 | 20 | 29 | > 160 | > 160 |
| 2 | 28 | 33 | 23 | 28 | > 160 | > 160 |
| 3 | 22 | 31 | - | 26 | - | > 160 |
| 4 | 25 | 27 | 19 | 22 | > 160 | > 160 |
| 5 | 20 | 28 | - | 21 | - | > 160 |
| 6 | 20 | 29 | - | 21 | - | > 160 |
| 7 | 20 | 24 | - | 16 | - | > 160 |
| 8 | 20 | 22 | - | - | - | - |

Table 2 (continued)

| | Not cured | | Cured | | | |
|---|---|---|---|---|---|---|
| | PA 180°, N/ 25mm | | PA 180°, N/ 25mm | | SAFT, °C | |
| | 40 µm | 60 µm | 40 µm | 60 µm | 40 µm | 60 µm |
| A | 14 | 18 | 13 | 16 | - | - |

Examples 9-16

Eight radiation-curable hot melt adhesives were prepared by mixing and compounding adhesive formulations 9 to 16 shown in Table 3.

The radiation-curable hot melt adhesives were then coated on a polyester (PET) film. The adhesive coatings had a thickness of about 40 µm.

The adhesive coatings were cured by Electron Beam Radiation. The Electron Beam curing dose was 6 Mrad.

The SAFT and the peel adhesion at 180° were determined before and after curing and measured as described in Examples 1-8.

Results are reported in Table 3.

Comparative Example B

Another radiation-curable hot melt adhesive was prepared by mixing and compounding adhesive formulation B, coating and curing by Electron Beam Radiation as in Examples 9-16. The composition of adhesive formulation B and the results of SAFT and peel adhesion measurements are also reported in Table 3. Adhesive formulation B had a Tg of -16 °C.

Table 3

| Formulations | 9 | 10 | 11 | 12 | B | 13 | 14 | 15 | 16 |
|---|---|---|---|---|---|---|---|---|---|
| KRATON D-KX222 C | 100 | 100 | 100 | 100 | 100 | 100 | 100 | 100 | 100 |
| REGALITE S 101 | 87.5 | 50 | 34.5 | 50 | 87.5 | 125 | 140.5 | 125 | 87.5 |
| FORAL 85-E | 62.5 | 100 | 115.5 | 100 | 62.5 | 25 | 9.5 | 25 | 62.5 |
| ONDINA 68 | 25.5 | 23 | 28.5 | 40 | 50 | 52 | 34 | 34.5 | 37 |
| IRGANOX 1010 | 1 | 1 | 1 | 1 | 1 | 1 | 1 | 1 | 1 |
| IRGAFOS 168 | 2 | 2 | 2 | 2 | 2 | 2 | 2 | 2 | 2 |
| Polymer content [%wt] | 36 | 36.5 | 36 | 34.5 | 33 | 33 | 35 | 35 | 35 |
| Tg [°C] | -9 | -10 | -12.5 | -15 | -16 | -15 | -9 | -10 | -12.5 |
| SAFT [°C] | | | | | | | | | |
| cured | 137 | 146 | >150 | 126 | 123 | 133 | >150 | >150 | >150 |
| non-cured | 87 | 87 | 86 | 81 | 85 | 86 | 94 | 93 | 90 |
| Peel Adhesion [N/25 mm] 20 min | | | | | | | | | |
| cured | 24 | 21 | 18 | 18 | 16 | 23 | 21 | 24 | 19 |
| non-cured | 28 | 25 | 21 | 23 | 19 | 27 | 24 | 28 | 22 |
| Peel Adhesion [N/25 mm] 24 h | | | | | | | | | |
| cured | 24 | 22 | 20 | 19 | 17 | 24 | 26 | 25 | 20 |
| non-cured | 29 | 27 | 23 | 23 | 19 | 27 | 29 | 28 | 22 |

FORAL 85-E is a partially hydrogenated resin ester tackifying resin, having a Ui of 19.5%.

IRGANOX 1010 is tetrakis-ethylene-(3,5-di-tertiary-butyl-4-hydroxy-hydrocinnamate)methane (primary anti-oxidant).

## Claims

**1.** A radiation-curable adhesive comprising

(a) a block copolymer comprising at least two mono-alkenyl aromatic hydrocarbon blocks and at least one butadiene block, wherein the 1,2-vinyl content in the butadiene block is at least 25% by weight;
(b) from 100 to 300 parts by weight of a tackifying resin, per 100 parts by weight of block copolymer, wherein the tackifying resin is a partially hydrogenated resin, having an unsaturation index (Ui) in the range from 3 to 25%;
(c) 5 to 100 parts by weight of a partially or fully saturated oil;
(d) optionally a photo-initiator; and
(e) one or more stabilisers;

wherein the glass transition temperature (Tg) as calculated by the Fox equation based on Differential Scanning Calorimetry is in the range from -15 °C to -5 °C.

**2.** A radiation-curable adhesive as claimed in claim 1, wherein the block copolymer the 1,2-vinyl content in the butadiene block is in the range from 30 to 70% by weight.

**3.** A radiation-curable adhesive as claimed in claim 1 or 2, wherein the block copolymer has the general structure $(AB)_pX(B^1)_q$, wherein A is a poly(mono-alkenyl aromatic hydrocarbon) block and B and $B^1$ are the same or different poly(butadiene) blocks, wherein X is the residue of a multivalent coupling agent having a maximum of active sites (m) in the range of from 3 to 6, wherein the number average value of p and q is in the range from 1.5 to m.

**4.** A radiation-curable adhesive as claimed in claim 3, wherein the average sum of p and q values is less than m and the coupling efficiency is less than 95%.

**5.** A radiation-curable adhesive composition as claimed in any one of the preceding claims, wherein the tackifying resin is a partially hydrogenated resin, having an unsaturation index (Ui) in the range from 5 to 22%.

**6.** A radiation-curable adhesive composition as claimed in any one of the preceding claims, wherein two or more stabilisers are present, selected from at least two of the stabiliser categories of anti-gelling agents, primary anti-oxidants and secondary anti-oxidants.

**7.** A radiation-curable adhesive composition as claimed in claim 6, wherein the anti-gelling agent is selected from the group consisting of phenolic acrylates or methacrylates represented by the general formula (III):

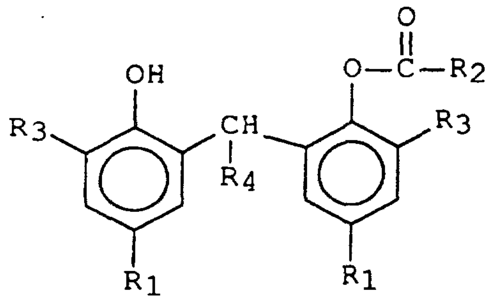

(III)

wherein $R_1$ is an alkyl group having 1 to 6 carbon atoms, $R_2$ is an alkenyl group having 2 to 4 carbon atoms, $R_3$ is a tert-butyl, a tert-pentyl, a cyclopentyl or a cyclohexyl group, and $R_4$ is hydrogen or an alkyl group having 1 to 18 carbon atoms.

**8.** A radiation-curable adhesive composition as claimed in claim 6 or 7, wherein the secondary anti-oxidant is selected from the group consisting of compounds represented by the general formula (IV) or (V):

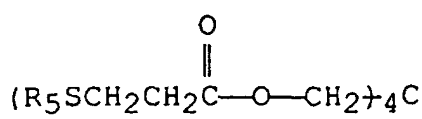

(IV)

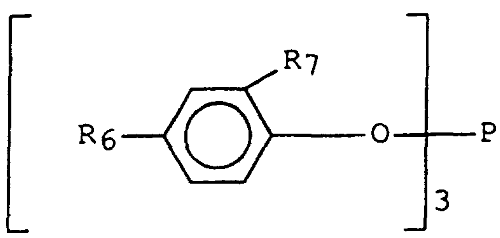

(V)

wherein $R_5$ is an alkyl group having 3 to 20 carbon atoms, $R_6$ is an alkyl group having 3 to 20 carbon atoms or a cycloalkyl group having 5 to 20 carbon atoms, and $R_7$ is hydrogen, a tert-butyl, a tert-pentyl, a cyclopentyl or a cyclohexyl group.

**9.** A radiation-curable adhesive composition as claimed in any one of the preceding claims 6-8, wherein the primary anti-oxidant is selected from the group consisting of hindered phenolic compounds.

**10.** A radiation-curable adhesive composition as claimed in any one of the preceding claims 6-9, wherein at least two stabilisers are present, one being selected from anti-gelling agents and another stabiliser being selected from secondary anti-oxidants.

**11.** A radiation-curable adhesive composition as claimed in any one of the preceding claims, which is a hot melt composition.

**12.** A radiation-cured adhesive composition obtainable by radiation curing of a radiation-curable adhesive composition as claimed in any one of the preceding claims.

**13.** Articles containing a radiation-curable adhesive composition as claimed in any one of the preceding claims 1-11, or a radiation-cured adhesive composition as claimed in claim 12.

**14.** A tape comprising a layer of a radiation-curable adhesive composition as claimed in any one of the preceding claims 1-11, or a radiation-cured adhesive composition as claimed in claim 12, coated on a film.

## Patentansprüche

1. Strahlungshärtbarer Klebstoff umfassend

a) ein Blockcopolymer umfassend wenigstens zwei monoalkenylaromatische Kohlenwasserstoffblöcke und wenigstens einen Butadienblock, wobei der 1,2-Vinylgehalt im Butadienblock wenigstens 25 Gewichts-% beträgt;
b) von 100 bis 300 Gewichtsteile eines Harzes zur Erhöhung der Klebrigkeit auf 100 Gewichtsteile des Blockcopolymers, wobei das Harz zur Erhöhung der Klebrigkeit ein teilweise hydriertes Harz ist, das einen Ungesättigtheitsindex (Ui) im Bereich von 3 bis 25 % aufweist;
c) 5 bis 100 Gewichtsteile eines teilweise oder vollständig gesättigten Öls ;
d) wahlweise einen Photoinitiator ; und
e) einen oder mehr Stabilisatoren ;

wobei die Glasübergangstemperatur (Tg) berechnet gemäß der Fox-Gleichung basierend auf Differentialscanningkalorimetrie, im Bereich von -15°C bis -5°C liegt.

2. Strahlungshärtbarer Klebstoff nach Anspruch 1, wobei im Blockcopolymer der 1,2 Vinylgehalt im Butadienblock im Bereich von 30 bis 70 Gewichts-% liegt.

3. Strahlungshärtbarer Klebstoff anch Anspruch 1 oder 2, wobei das Blockcopolymer die allgemeine Struktur $(AB)_pX(B^1)_q$ aufweist, wobei A ein poly(mono-alkenylaromatischer Kohlenwasserstoff)Block ist und B und $B^1$ gleiche oder verschiedene Poly(butadien)blöcke sind, wobei X der Rest eines mehrwertigen Kopplungsmittels ist, das ein Maximum an aktiven Stellen (m) im Bereich von 3 bis 6 aufweist, wobei der Zahlenmittelwert von p und q im Bereich von 1,5 bis m beträgt.

4. Strahlungshärtbarer Klebstoff nach Anspruch 3, wobei die Durchschnittssumme der p und q Werte weniger als m beträgt und die Kopplungseffizienz weniger als 95 %.

5. Strahlungshärtbare Klebstoffzusammensetzung nach einem der vorhergehenden Ansprüche, wobei das Harz zur Erhöhung der Klebrigkeit ein teilweise hydriertes Harz ist, das einen Ungesättigtheitindex (Ui) im Bereich von 5 bis 23 % aufweist.

6. Strahlungshärtbare Klebstoffzusammensetzung nach einem der vorhergehenden Ansprüche, wobei zwei oder mehr Stabilisatoren vorhanden sind, ausgewählt aus wenigstens zwei der Stabilisatorenkategorien Gelverhinderungsmittel, primäre Antioxidationsmittel und sekundäre Antioxidationsmittel.

7. Strahlungshärtbare Klebstoffzusammensetzung nach Anspruch 6, wobei das Gelverhinderungsmittel ausgewählt ist aus der Gruppe bestehend aus phenolischen Acrylaten oder Methacrylaten die durch die allgemeine Formel (III) dargestellt werden

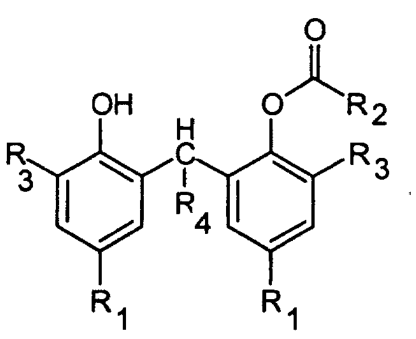

(III)

wobei $R_1$ eine Alkylgruppe ist, die 1 bis 6 Kohlenstoffatome aufweist, $R_2$ eine Alkenylgruppe ist, die 2 bis 4 Koh-

lenstoffatome aufweist, $R_3$ eine tert-butyl, eine tert-pentyl, eine Cyclopentyl oder eine Cyclohexylgruppe ist, und $R_4$ Wasserstoff ist oder eine Alkylgruppe, die 1 bis 18 Kohlenstoffatome aufweist.

**8.** Strahlungshärtbare Klebstoffzusammensetzung nach Anspruch 6 oder 7, wobei das sekundäre Antioxidationsmittel ausgewählt ist aus der Gruppe bestehend aus Verbindungen dargestellt durch die allgemeine Formel (IV) oder (V) :

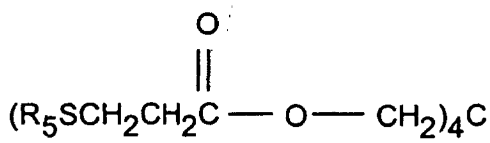

(IV)

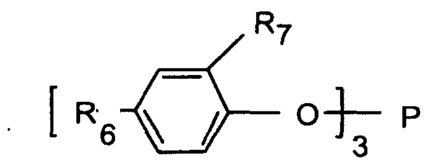

(V)

wobei $R_5$ eine Alkylgruppe ist, die 3 bis 20 Kohlenstoffatome aufweist, $R_6$ eine Alkylgruppe ist, die 3 bis 20 Kohlenstoffatome aufweist oder eine Cycloalkylgruppe, die 5 bis 20 Kohlenstoffatome aufweist und $R_7$ ist Wasserstoff, eine tert-butyl, eine tert-pentyl, eine Cyclopentyl oder eine Cyclohexylgruppe.

**9.** Strahlungshärtbare Klebstoffzusammensetzung nach einen der vorhergehenden Ansprüche 6 bis 8, wobei das primäre Antioxidationsmittel ausgewählt ist aus der Gruppe bestehend aus sterisch gehinderten phenolischen Verbindungen.

**10.** Strahlungshärtbare Klebstoffzusammensetzung nach einem der vorhergehenden Ansprüche 6 bis 9, wobei wenigstens zwei Stabilisatoren vorhanden sind und der eine ausgewählt ist aus Gelverhinderungsmitteln und ein anderer Stabilisator ausgewählt ist aus sekundären Antioxidationsmitteln.

**11.** Strahlungshärtbare Klebstoffzusammensetzung nach einem der vorhergehenden Ansprüche, die eine Heißschmelzzusammensetzung ist.

**12.** Durch Strahlung gehärtete Klebstoffzusammensetzung erhältlich durch Strahlungshärten einer durch Strahlung härtbaren Klebstoffzusammensetzung nach einem der vorhergenden Ansprüche.

**13.** Formteile enthaltend eine durch Strahlung härtbare Klebstoffzusammensetzung nach einem der vorhergehenden Ansprüche 1 bis 11, oder eine durch Strahlung gehärtete Klebstoffzusammensetzung nach Anspruch 12.

**14.** Band umfassend eine Lage einer durch Strahlung härtbaren Klebstoffzusammensetzung nach einem der vorhergehenden Ansprüche 1 bis 11, oder eine durch Strahlung gehärtete Klebstoffzusammensetzung nach Anspruch 12, die auf eine Folie als Schicht aufgebracht wurde.

**Revendications**

**1.** Adhésif durcissable par rayonnement comprenant :

(a) un copolymère bloc comprenant au moins deux blocs d'hydrocarbure monoalcényl aromatique et au moins

un bloc de butadiène dans lequel la teneur en 1,2-vinyle dans le bloc de butadiène est d'au moins 25% en poids;
(b) de 100 à 300 parties en poids d'une résine assurant un collage, pour 100 parties en poids de copolymère bloc,

dans lequel la résine assurant un collage est une résine partiellement hydrogénée, ayant un indice d'insaturation (iU) allant de 3 à 25%;

(c) 5 à 100 parties en poids d'une huile partiellement ou totalement saturée;
(d) éventuellement un photo-initateur; et
(e) un ou plusieurs stabilisants;

dans lequel la température de transition vitreuse (Tg) telle que calculée par l'équation de Fox basée sur la Calorimétrie à Balayage Différentiel se situe dans l'intervalle de -15°C à -5°C.

**2.** Adhésif durcissable par rayonnement suivant la revendication 1, dans lequel dans le copolymère bloc la teneur en 1,2-vinyle dans le bloc de butadiène se situe dans la plage de 30 à 70% en poids.

**3.** Adhésif durcissable par rayonnement suivant l'une ou l'autre des revendications 1 et 2, dans lequel le copolymère bloc a la structure générale $(AB)_pX(B^1)_q$, dans laquelle A est un bloc de poly-(hydrocarbure monoalcényl aromatique) et B et $B^1$ sont des blocs de poly(butadiène) identiques ou différents, dans laquelle X est le résidu d'un agent de couplage multivalent ayant un maximum de sites actifs (m) allant de 3 à 6, dans laquelle la valeur moyenne numérique de p et q se situe dans la plage de 1,5 à m.

**4.** Adhésif durcissable par rayonnement suivant la revendication 3, dans lequel la somme moyenne des valeurs de p et q est inférieure à m et le rendement de couplage est inférieur à 95%.

**5.** Composition d'adhésif durcissable par rayonnement suivant l'une quelconque des revendications précédentes, dans laquelle la résine assurant un collage est une résine partiellement hydrogénée, ayant un indice d'insaturation (iU) allant de 5 à 22%.

**6.** Composition d'adhésif durcissable par rayonnement suivant l'une quelconque des revendications précédentes, dans laquelle deux ou plusieurs stabilisants sont présents, choisis parmi au moins deux des catégories de stabilisant constituées par les agents antigélifiants, les antioxydants primaires et les antioxydants secondaires.

**7.** Composition d'adhésif durcissable par rayonnement suivant la revendication 6, dans laquelle l'agent antigélifiant est choisi dans le groupe comprenant les acrylates et méthacrylates phénoliques représentés par la formule générale (III) :

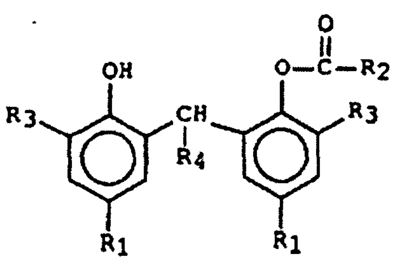

(III)

dans laquelle $R_1$ est un groupe alkyle comportant 1 à 6 atomes de carbone, $R_2$ est un groupe alcényle comportant 2 à 4 atomes de carbone, $R_3$ est un groupe tert-butyle, tert-pentyle, cyclopentyle ou cyclohexyle, et $R_4$ est de l'hydrogène ou un groupe alkyle comportant 1 à 18 atomes de carbone.

**8.** Composition d'adhésif durcissable par rayonnement suivant l'une ou l'autre des revendications 6 et 7, dans laquelle l'anti-oxydant secondaire est choisi dans le groupe comprenant les composés représentés par la formule générale (IV) ou (V) :

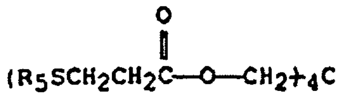

(IV)

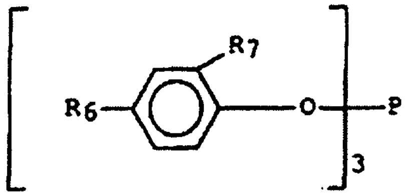

(V)

formules dans lesquelles $R_5$ est un groupe alkyle comportant 3 à 20 atomes de carbone, $R_6$ est un groupe alkyle comportant 3 à 20 atomes de carbone ou un groupe cycloalkyle comportant 5 à 20 atomes de carbone, et $R_7$ est de l'hydrogène ou un groupe tert-butyle, tert-pentyle, cyclopentyle ou cyclohexyle.

**9.** Composition d'adhésif durcissable par rayonnement suivant l'une quelconque des revendications 6 à 8 précédentes, dans laquelle l'antioxydant primaire est choisi dans le groupe comprenant les composés phénoliques encombrés.

**10.** Composition d'adhésif durcissable par rayonnement suivant l'une quelconque des revendications 6 à 9 précédentes, dans laquelle au moins deux stabilisants sont présents, l'un étant choisi parmi les agents antigélifiants et l'autre stabilisant étant choisi parmi les antioxydants secondaires.

**11.** Composition d'adhésif durcissable par rayonnement suivant l'une quelconque des revendications précédentes, qui est une composition thermofusible.

**12.** Composition d'adhésif durcie par rayonnement obtenable par durcissement par rayonnement d'une composition d'adhésif durcissable par rayonnement suivant l'une quelconque des revendications précédentes.

**13.** Articles contenant une composition d'adhésif durcissable par rayonnement suivant l'une quelconque des revendications 1 à 11 précédentes, ou une composition d'adhésif durcie par rayonnement suivant la revendication 12.

**14.** Ruban comprenant une couche d'une composition d'adhésif durcissable par rayonnement suivant l'une quelconque des revendications 1 à 11 précédentes, ou une composition d'adhésif durcie par rayonnement suivant la revendication 12, appliqué sur un film.